# EUROPEAN PATENT APPLICATION

(11) **EP 4 717 066 A1**
(43) Date of publication of application: **01.04.2026**
(21) Application number: 25204194.2
(22) Date of filing: 24.09.2025
(51) Int. Cl.: A01D 34/00, A01D 34/81

(54) **WORKING MACHINE**

(30) Priority: 27.09.2024 JP 2024168201
(71) Applicant: Yamabiko Corporation, Ohme-shi, Tokyo 198-8760 (JP)
(72) Inventor: NAKANO, Kenji, Tokyo, 1988760 (JP)
(74) Representative: Winter, Brandl - Partnerschaft mbB

(57) **Abstract**

A working machine includes a main body and an operation unit. The main body includes a travel motor, a mounting portion, and an attachment portion. The travel motor generates rotational power for traveling of the main body. The mounting portion allows a battery supplying electric power to the travel motor to be attachable and detachable. The attachment portion is disposed within a predetermined area, in a plan view of the main body, between a first straight line and a second straight line. The first straight line passes left-right, orthogonal to a front-rear direction, through a central position of the travel motor in the front-rear direction. The second straight line passes left-right through a central position of the mounting portion in the front-rear direction. The operation unit is connected to the attachment portion and configured to be operable so as to assist the travel of the main body.

## Description

### BACKGROUND

The present disclosure relates to a working machine.

### RELATED ART

JP2016-185134A discloses an unmanned work vehicle that facilitates manual movement operation in the event the unmanned work vehicle becomes unable to travel.

This unmanned work vehicle includes a traveling device driven by power from a prime mover, a switching device that switches a transmission state between the prime mover and the traveling device, and a control system having a control unit configured to control the operation of the switching device. The vehicle further includes a manual operation tool that is switchable to a use state enabling human-powered assistance for traveling, and a notification means for notifying the control system of the switching of the manual operation tool to the use state.

The control system includes an auxiliary control unit configured to control the operation of the switching device with priority over the control unit upon detecting the switching of the manual operation tool to the use state based on notification from the notification means.

### SUMMARY

### Problems to be Solved by Invention

The working machine disclosed in JP2016-185134A is intended to allow the operator to lift the working machine when it is incapable of traveling; however, it does not disclose improvement in the stability of the working machine during traveling or assistance by the operator during traveling.

In view of the above circumstances, the present disclosure provides a working machine capable of improving stability during traveling and enabling assistance by the operator during traveling.

### Means for Solving Problems

According to an aspect of the present disclosure, there is provided a working machine, including: a main body including: a travel motor configured to generate rotational power for causing travel of the main body, a mounting portion configured to allow a battery for supplying electric power to the travel motor to be detachably mounted; and an attachment portion disposed inside a predetermined area formed in a plan view of the main body, wherein: the predetermined area is an area formed between a first straight line and a second straight line, the first straight line is a line that passes, in a left-right direction orthogonal to a front-rear direction, through a center position of the travel motor with respect to the front-rear direction that is a traveling direction of the main body; and the second straight line is a line that passes, in the left-right direction, through a center position of the mounting portion with respect to the front-rear direction; and an operation unit connected to the attachment portion, the operation unit being configured to be operable so as to assist the travel of the main body.

According to this aspect, it is possible to improve the stability of the working machine during traveling and enable assistance by the operator during traveling.

### BRIEF DESCRIPTION OF DRAWINGS

FIG. 1 is a diagram showing an example of the overall configuration of a grass mower 11.
FIG. 2 is a perspective view showing the external appearance of the grass mower 11.
FIG. 3 is a front view showing the external appearance of the grass mower 11.
FIG. 4 is a left side view showing the external appearance of the grass mower 11.
FIG. 5 is a rear view showing the external appearance of the grass mower 11.
FIG. 6 is a top view showing the external appearance of the grass mower 11.
FIG. 7 is a bottom view showing the grass mower 11 with some components omitted.
FIG. 8 is a perspective view showing the grass mower 11 with some components omitted.
FIG. 9 is a top view showing the grass mower 11 with some components omitted for explaining a predetermined area AR.
FIG. 10 is a top view showing the grass mower 11 with some components omitted for explaining the predetermined area AR and a predetermined width D.
FIG. 11 is a top view showing the grass mower 11 with some components omitted.
FIG. 12 is a perspective view of an attachment portion 28.
FIG. 13 is a top view showing the grass mower 11 with some components omitted for explaining an example arrangement of a mounting portion 29.
FIG. 14 is a top view showing the grass mower 11 with some components omitted for explaining an example in which a dummy battery BB is mounted.
FIG. 15 is a top view showing the grass mower 11 with some components omitted for explaining an example in which the position of the mounting portion 29 is displaced.
FIG. 16 is a top view showing the grass mower 11 with some components omitted for explaining an example of a weight mounting portion 293.

### DETAILED DESCRIPTION

Hereinafter, an example of an embodiment of the present disclosure will be described with reference to the drawings. Various features described in the embodiment below can be combined with each other.

A program for implementing the software described in one embodiment may be provided as a non-transitory computer-readable medium, may be made available for download from an external server, or may be provided in such a manner that the program is executed on an external computer and its functions are realized on a client terminal (so-called cloud computing).

In various types of information processing according to one embodiment, an input and an output corresponding to the input can be realized. Here, if an output is obtained as a result of the input, the form of information referred to in such information processing (hereinafter referred to as reference information) is not limited. The reference information may be, for example, rule-based information such as a database, a lookup table, or a predetermined function (including decision formulas such as regression equations constructed using statistical methods), a pretrained model that has learned the correlations between inputs and outputs, or a large language model capable of outputting a desired result in response to a prompt.

In one embodiment, the term "unit" may include, for example, a combination of hardware resources implemented by circuitry in a broad sense and software information processing that can be specifically realized using those hardware resources. In addition, in one embodiment, various types of information are handled. This information can be represented, for example, by a physical value of a signal value indicating voltage or current, by a high or low level of a signal value as a set of binary bits composed of 0s and 1s, or by a quantum superposition (so-called qubits), and communication and computation can be performed on a circuit in a broad sense.

Further, the term "circuit in a broad sense" refers to a circuit realized by appropriately combining at least a circuit, circuitry, a processor, and memory. The processor may be a general-purpose processor or a dedicated circuit. That is, the term "circuit in a broad sense" may include application specific integrated circuits (ASICs), programmable logic devices (for example, simple programmable logic devices (SPLDs), complex programmable logic devices (CPLDs), field programmable gate arrays (FPGAs)), and the like.

### 1. Overall Configuration

In this section, a working machine 1 according to one embodiment will be described. The working machine 1 is configured to travel in order to perform a predetermined task. In the following, a case where the working machine 1 is the grass mower 11 will be described as an example.

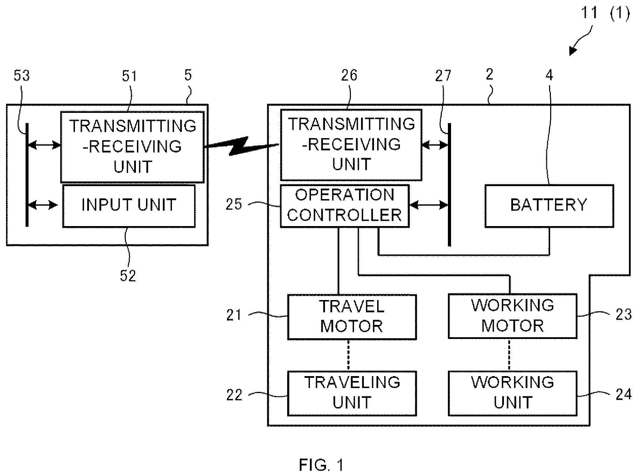

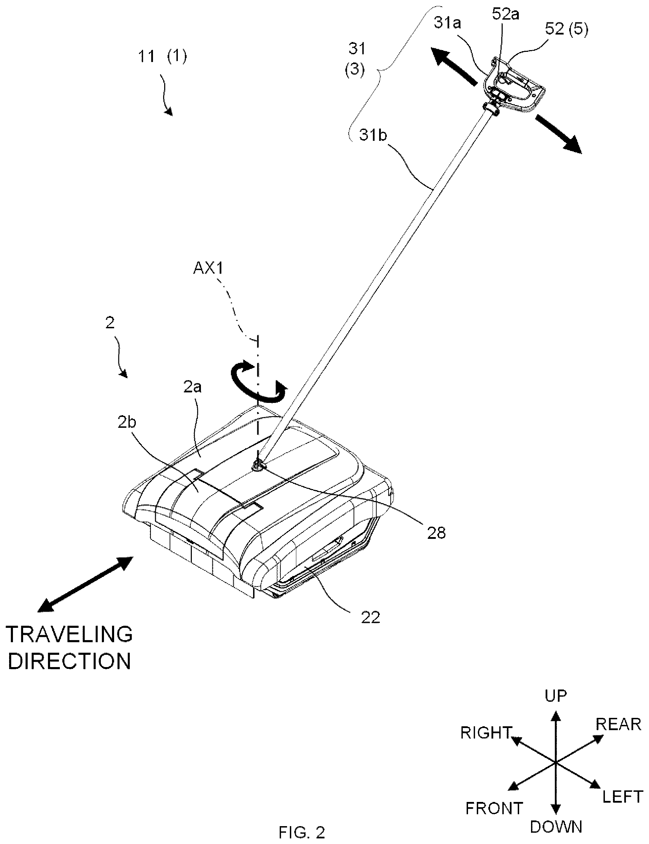

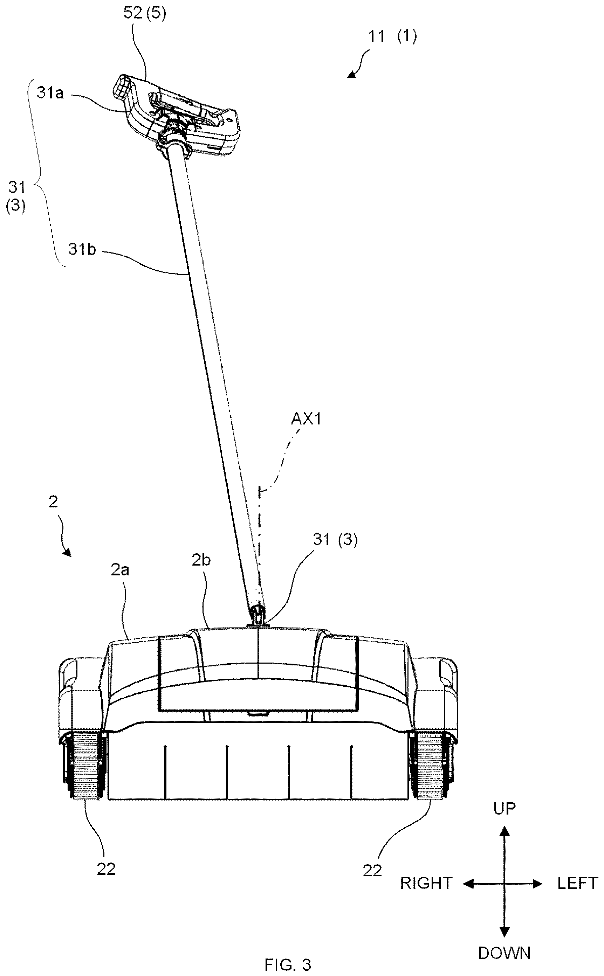

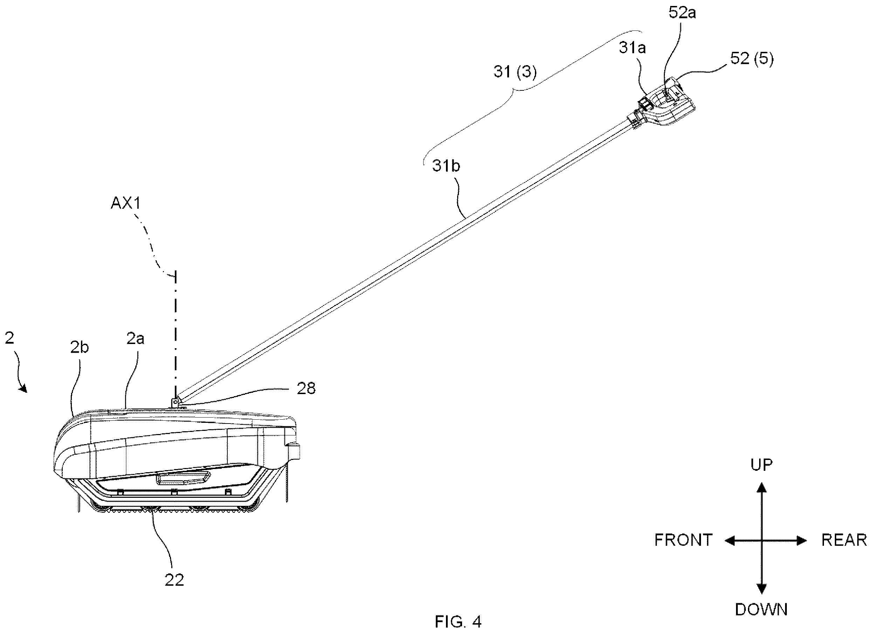

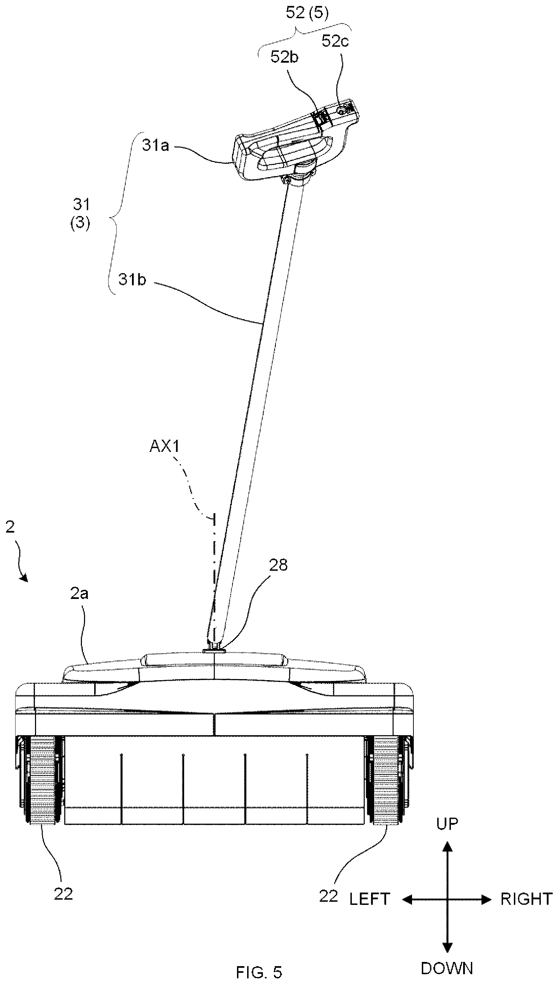

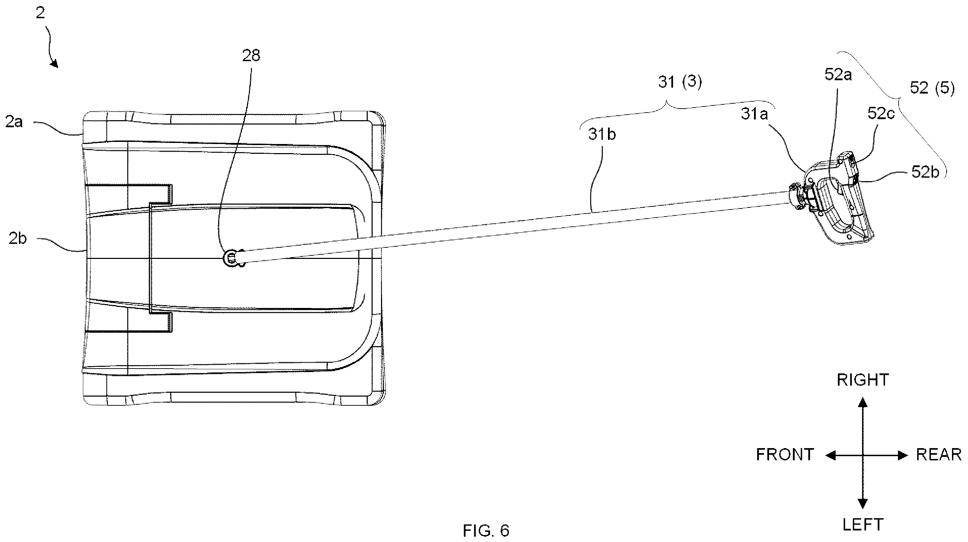

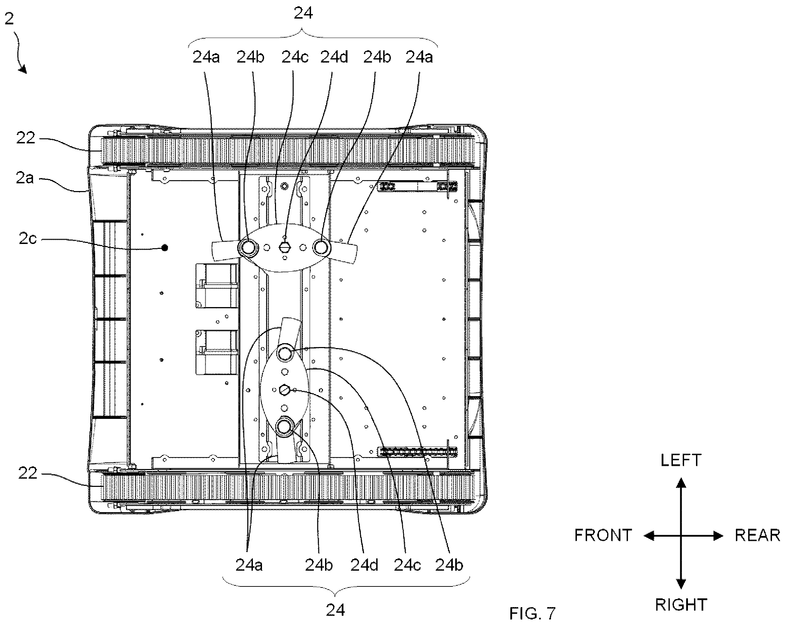

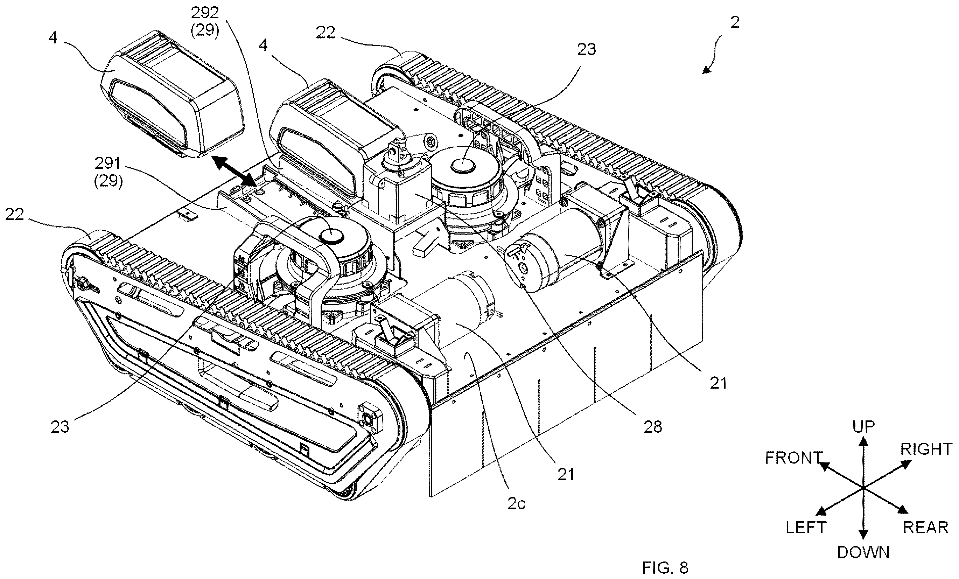

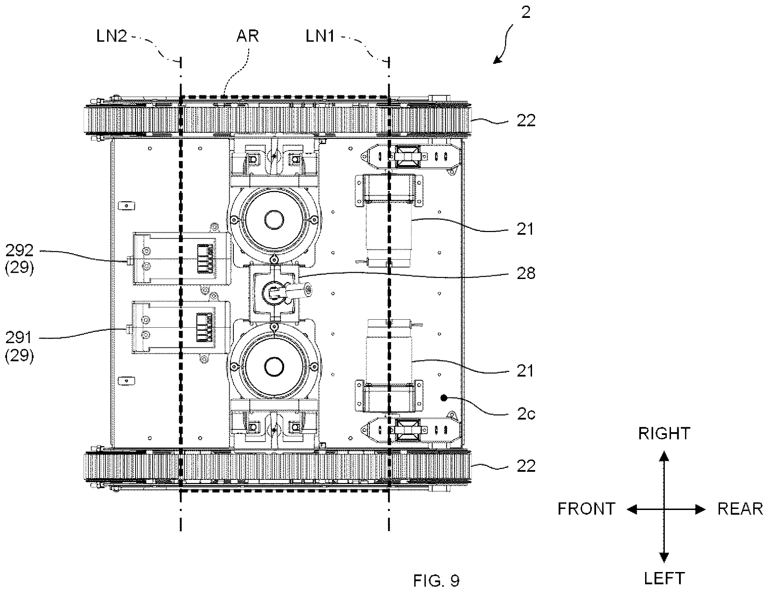

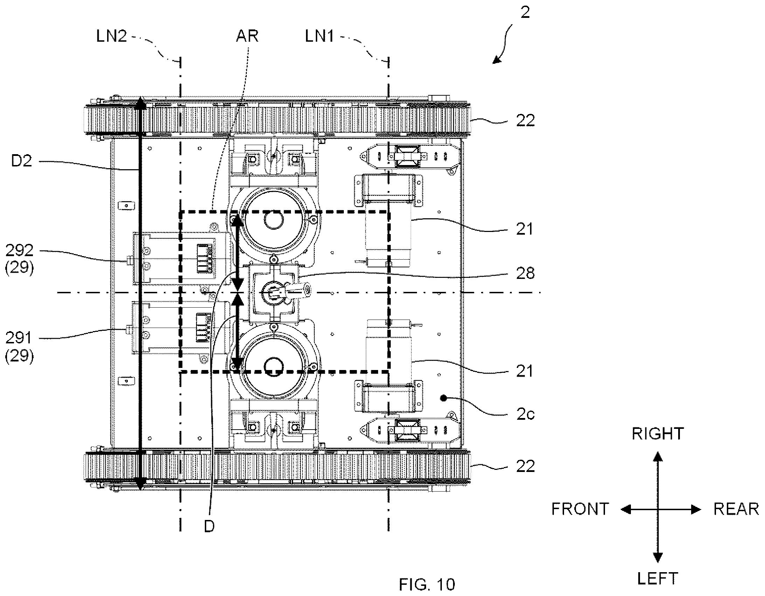

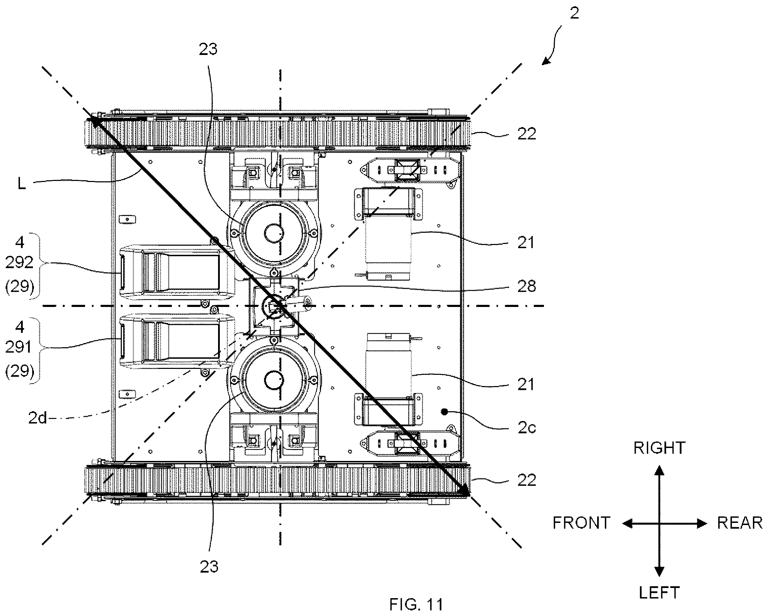

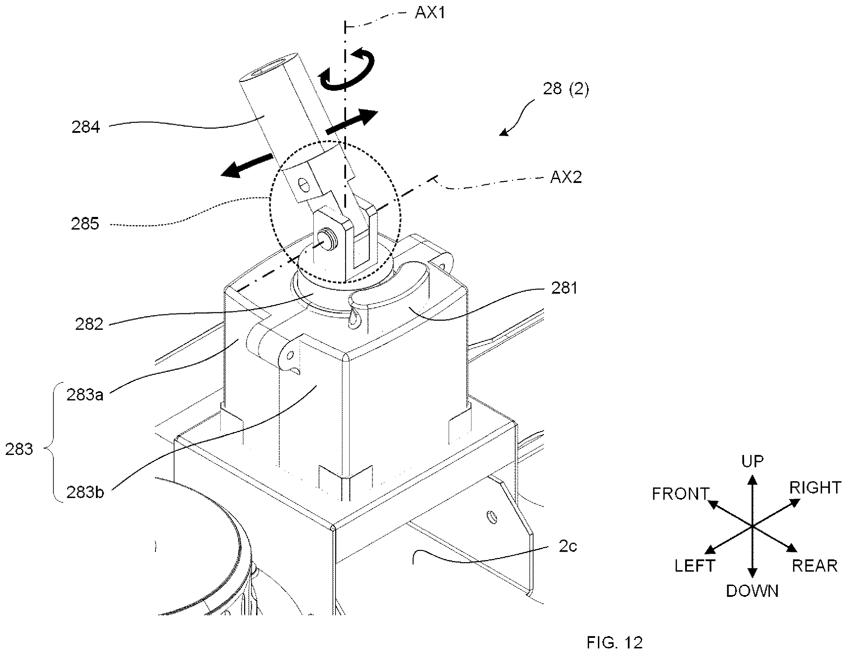

FIG. 1 is a diagram showing an example of the overall configuration of the grass mower 11. FIG. 2 is a perspective view showing the external appearance of the grass mower 11. FIG. 3 is a front view showing the external appearance of the grass mower 11. FIG. 4 is a left side view showing the external appearance of the grass mower 11. FIG. 5 is a rear view showing the external appearance of the grass mower 11. FIG. 6 is a top view showing the external appearance of the grass mower 11. FIG. 7 is a bottom view showing the grass mower 11 with some components omitted. FIG. 8 is a perspective view showing the grass mower 11 with some components omitted. FIG. 9 is a top view showing the grass mower 11 with some components omitted for explaining the predetermined area AR. FIG. 10 is a top view showing the grass mower 11 with some components omitted for explaining the predetermined area AR and the predetermined width D. FIG. 11 is a top view showing the grass mower 11 with some components omitted. FIG. 12 is a perspective view of the attachment portion 28.

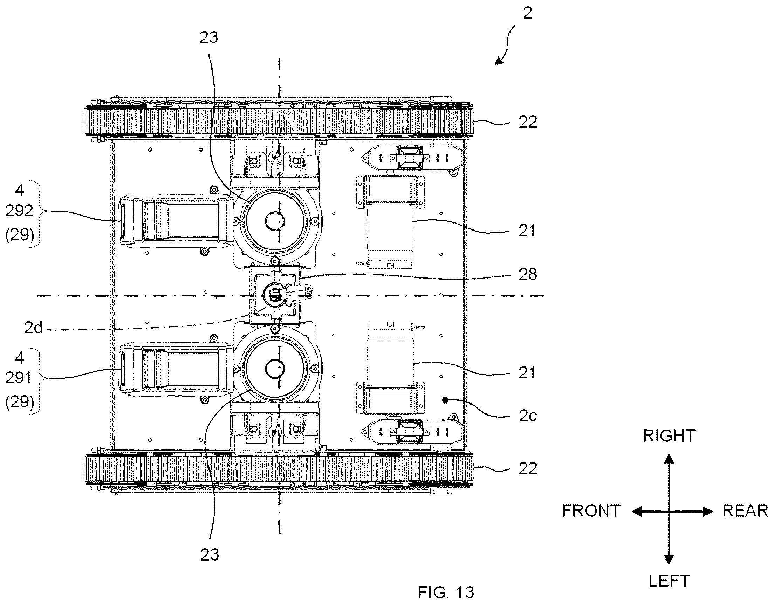

In the following description, directions of the grass mower 11 and components thereof are defined based on "up", "down", "left", "right", "front", and "rear" shown in FIGs. 2 to 12 (the same applies to FIGs. 13 to 16). Further, in the following description, "up" is also referred to as "upper" or "upward," and "down" as "lower" or "downward." The direction is referred to as the "up-down" or "vertical direction."
The same applies to "left," "right," "front," and "rear."

### (Grass Mower 11)

As shown in FIGs. 1 and 2, the grass mower 11, which is the working machine 1, includes a main body 2, an operation unit 3, a battery 4, and a remote control 5. The grass mower 11 has a traveling function and a working function, and performs mowing work while traveling.

### (Main Body 2)

As shown in FIGs. 1 and 8, the main body 2 includes travel motors 21, traveling units 22, working motors 23, a working unit 24, an operation controller 25, a transmitting-receiving unit 26, a communication bus 27, an attachment portion 28, and a mounting portion 29.

As shown in FIGs. 2 and 8, the main body 2 has an upper cover 2a and a lower support plate 2c. As shown in FIGs. 2 to 6, the upper cover 2a has a lid-like shape and is configured to cover the components constituting the main body 2 from above. These components are mounted on the lower support plate 2c. Components of the main body 2, including the travel motors 21, the traveling units 22, the working motors 23, the working units 24, the operation controller 25, the transmitting-receiving unit 26, the communication bus 27, the attachment portion 28, and the mounting portion 29, are mechanically connected to the lower support plate 2c. As shown in FIGs. 2 and 6, the upper cover 2a includes an opening/closing portion 2b capable of being opened and closed. By opening the opening/closing portion 2b, an operator can confirm or operate the components of the main body 2 covered by the upper cover 2a. That is, the opening/closing portion 2b allows the operator to confirm or operate these components without removing the upper cover 2a from the grass mower 11. The lower support plate 2c is plate-shaped and is disposed below the upper cover 2a.

The travel motor 21 is an electric motor and is configured to generate rotational power for causing travel of the main body 2. Specifically, as shown in FIG. 8, in the grass mower 11, a total of two travel motors 21 are disposed, one on each of the left and right sides, at a rear portion of an upper surface of the lower support plate 2c. Each travel motor 21 has an output shaft and is mechanically connected to the traveling unit 22 either directly or via chains, gears, or the like (not shown). The traveling unit 22 receives rotational power from the travel motors 21 to drive the grass mower 11. As shown in FIGs. 3 to 5, the traveling unit 22 in the grass mower 11 is an endless track, which is also called a "caterpillar" (registered trademark). The traveling unit 22 is not limited to the endless track and may instead use tires or the like.

Each working motor 23 is an electric motor and is configured to generate rotational power for performing a mowing operation. Specifically, as shown in FIG. 8, in the grass mower 11, a total of two working motors 23 are disposed, one on each of the left and right sides, substantially at a center in the front-rear direction on the upper surface of the lower support plate 2c. Each working motor 23 is mechanically connected to its corresponding working unit 24 either directly or via chains, gears, or the like (not shown). The working unit 24 receives rotational power from the working motors 23 to perform predetermined operation. As shown in FIG. 7, the working unit 24 in the grass mower 11 is configured to rotate with rotational power from the working motors 23 to mow grass or the like. Specifically, the working unit 24 is of a free knife type including cutting blades 24a, cutting blade shafts 24b, a cutting blade attachment portion 24c, and a rotary shaft 24d. The cutting blade 24a is plate-shaped and configured to rotate about the rotary shaft 24d via the cutting blade attachment portion 24c while the grass mower 11 travels, cutting grass or the like that comes into contact with the cutting blade 24a. The cutting blade attachment portion 24c has an elliptical shape with the rotary shaft 24d connected substantially at a center, and rotates in a plane defined by the front-rear and left-right directions. The cutting blade attachment portion 24c is provided with the cutting blade shaft 24b at both longitudinal ends, and the cutting blade 24a is connected to both the upper and lower sides of each cutting blade shaft 24b. In addition, the cutting blade 24a is mounted to the cutting blade shaft 24b of the cutting blade attachment portion 24c, allowing rotation within a predetermined range around the cutting blade shaft 24b. The working unit 24 is not limited to the free knife type, and may be adopted other forms such as resin cords (nylon cords, for example), metal blades (including reel blades, chip saws, or shredder blades), or reciprocating blades.

As shown in FIG. 1, the energization of the travel motor 21 and the working motor 23 from the battery 4 is controlled by the operation controller 25. That is, the operation controller 25 is electrically connected to the travel motor 21, the working motor 23, and the battery 4 via wiring, connectors, and the like, and controls energization from the battery 4 to the travel motor 21 and the working motor 23. Accordingly, the operation controller 25 is configured to electrically control the rotation of the travel motors 21 and the working motors 23. The operation controller 25 and the transmitting-receiving unit 26 are electrically connected via the communication bus 27. The transmitting-receiving unit 26 has a wireless communication function and performs wireless communication with the remote control 5. Details of the battery 4 and the remote control 5 will be described later.

As shown in FIG. 9, the attachment portion 28 has a box shape and is disposed inside the predetermined area AR formed in a plan view of the main body 2. Specifically, as shown in FIG. 9, the attachment portion 28 is disposed substantially at a center of an upper surface of the lower support plate 2c within the predetermined area AR. The attachment portion 28 is not limited to being disposed substantially at the center of an upper surface of the lower support plate 2c, but may be located off-center in the front-rear direction or the left-right direction as long as the attachment portion 28 remains within the predetermined area AR. In FIG. 9, the predetermined area AR is formed between the first straight line LN1 and the second straight line LN2. That is, in this case, the predetermined area AR is an area formed between the first straight line LN1 and the second straight line LN2. Here, the first straight line LN1 is a line that passes, in a left-right direction orthogonal to a front-rear direction, through a center position of the travel motor 21 with respect to the front-rear direction that is a traveling direction of the main body 2. The second straight line LN2 is a line that passes, in the left-right direction, through a center position of the mounting portion 29 with respect to the front-rear direction. According to this aspect, the stability of the grass mower 11 during traveling can be improved, and it becomes possible for an operator to assist during traveling. The battery 4 and the travel motor 21 are both heavy components among the parts constituting the grass mower 11. These components greatly affect the center of gravity of the entire vehicle body. In this embodiment, these components are arranged so as to be distributed in the front and rear portions of the vehicle body. In the grass mower 11 in which the working unit 24 is disposed at a substantially central part of the body thereof, this configuration can prevent the body from lifting off the ground regardless of the traveling direction of the grass mower 11. In more detail, by adopting the travel motor 21 and the battery 4 as drive sources, the rotational direction of the travel motor 21 can be easily switched between forward and reverse, enabling easy reciprocating travel (Generally, in engine-driven types, since the direction of the output shaft cannot be changed, a complex transmission mechanism is required to switch between forward and reverse). It is a significant advantage that the grass mower 11 can easily travel in either traveling direction; however, if a heavy component is disposed at the center of the vehicle body as in JP2016-185134A, the vehicle body may lift off the ground depending on the traveling direction. In the self-propelled grass mower 11 of this embodiment, by disposing heavy components both in front of and behind the working unit 24 in the traveling direction, the vehicle body can be effectively prevented from lifting off the ground, thereby achieving stable mowing work regardless of the traveling direction of the grass mower 11. Based on such an arrangement, when further considering the position of the attachment portion 28, depending on its position, the burden on the operator holding an end of the operation unit 3 may increase. This influence becomes particularly significant when the grass mower 11 is used on sloped ground. For example, as in JP2016-185134A, if the attachment portion 28 is provided at an end of the main body 2, the burden on the operator for assistance increases significantly. In this embodiment, by providing the attachment portion 28 within the predetermined area AR defined by the center positions of the travel motor 21 and the battery 4, the burden on the operator holding the operation unit 3 can be reduced regardless of the traveling direction of the grass mower 11 or environment (such as slopes).

Further, as shown in FIG. 10, it is preferable that the predetermined area AR is configured to have the predetermined width D extending to the left and right from the center line in the left-right direction. In this case, each predetermined width D is preferably set to be 20% or less of a width D2 of the main body 2 in the left-right direction. According to this aspect, the stability of the grass mower 11 during traveling and turning, particularly during pivot turns, can be further improved, and assistance by the operator during traveling is enabled.

As shown in FIG. 12, the attachment portion 28 includes a switching portion 281, a rotary body 282, a case 283, and a fixing portion of a control rod 284.

The switching portion 281 is configured to be detachable from the attachment portion 28 by moving the switching portion 281 upward from the state of being attached to the case 283. The attachment portion 28 can change the attachment angle around the central axis AX1 of the attachment portion 28 by removing the switching portion 281. On the other hand, the attachment portion 28 is fixed around the central axis AX1 of the attachment portion 28 by attaching the switching portion 281. The central axis AX1 is a vertical axis.

The rotary body 282 is disk-shaped and configured to be rotatable while being accommodated in the case 283. The rotation of the rotary body 282 can be permitted or restricted by the attaching or detaching of the switching portion 281. As shown in FIG. 12, the case 283 includes a front case 283a and a rear case 283b. The rotary body 282 is accommodated in the case 283 so as to be rotatable around the central axis AX1.

As shown in FIG. 12, the fixing portion of the control rod 284 is cylindrical, provided above the attachment portion 28, and configured to be connectable to the operation unit 3. The fixing portion of the control rod 284 is connected to the rotary body 282 so as to rotate around a predetermined axis AX2. Accordingly, a hinge structure 285 is formed. That is, the hinge structure 285 is configured so that the operation unit 3 connected to the attachment portion 28 rotates around the predetermined axis AX2 as a fulcrum.

As shown in FIG. 8, the mounting portion 29 is plate-shaped and configured so that the battery 4 for supplying electric power to the travel motors 21 can be attached and detached. The mounting portion 29 includes a first mounting portion 291 and a second mounting portion 292. The first mounting portion 291 and the second mounting portion 292 are disposed substantially near the center in the left-right direction at the front portion of the upper surface of the lower support plate 2c. The first mounting portion 291 and the second mounting portion 292 are inclined such that they approach the lower support plate 2c from the front toward the rear. Details of the battery 4 will be described later.

### (Operation Unit 3)

As shown in FIG. 2, the main body 2 is configured to be connected to the operation unit 3 via the attachment portion 28. The operation unit 3 is connected to the attachment portion 28 and is configured to be operable to assist the travel of the main body 2. The operation unit 3 is an operation rod 31. According to this aspect, the main body 2 can be directly operated the operation rod 31. Due to the high rigidity of the operation rod 31, various operating patterns of the main body 2 can be handled without increasing the burden on the operator. These include pulling the main body 2 as an auxiliary operation using the operation rod 31, pushing the main body 2 forward from behind, and maintaining only the center of rotation during turning without moving the operation unit 3. In addition, the operation rod 31 includes a gripping portion 31a and a connecting portion 31b.

The gripping portion 31a forms a circular ring when integrated with the remote control 5, and is gripped by the operator when their hand is inserted into the inner side of the circular ring. As shown in FIG. 2, the connecting portion 31b is connected below the gripping portion 31a. The connecting portion 31b is pipe-shaped and connects the attachment portion 28 and the gripping portion 31a. That is, the operation rod 31 is connected to the main body 2 via the attachment portion 28 and is configured to be gripped to assist the travel of the main body 2. The connecting portion 31b shown in FIG. 2 has a fixed length and is non-telescopic, but is not limited thereto and, for example, may include a telescopic mechanism. Details of the remote control 5 will be described later.

### (Battery 4)

As shown in FIGs. 8 and 11, each battery 4 is detachably attached to the first mounting portion 291 and the second mounting portion 292 (mounting portion 29). Namely, the battery 4 is disposed substantially at a center in the left-right direction at the front part of the upper surface of the lower support plate 2c. The battery 4 is constructed by housing a secondary battery, such as a lithium-ion rechargeable battery inside a rectangular case. The battery 4 is a battery pack that can be attached and detached relative to the mounting portion 29 by sliding it in the front-rear direction. In the grass mower 11, two batteries 4 are mounted; however, the mower is not limited to this configuration and may instead include one mounting portion 29 or three or more mounting portions 29, with batteries 4 mounted on these mounting portions 29.

The grass mower 11 is configured such that the battery 4 can be attached and detached by opening and closing the opening/closing portion 2b provided in the upper cover 2a. That is, the grass mower 11 is configured so that the battery 4 can be attached and detached by opening and closing the opening/closing portion 2b, without removing the upper cover 2a from the grass mower 11.

### (Remote Control 5)

As shown in FIG. 1, the remote control 5 includes a transmitting-receiving unit 51 and an input unit 52. The transmitting-receiving unit 51 and the input unit 52 are electrically connected via a communication bus 53. As shown in FIG. 2, the remote control 5 is integrally configured with the gripping portion 31a of the operation unit 3. The remote control 5 is a controller having wireless communication functionality and is configured to control the grass mower 11 based on operations by the user. The remote control 5 may be configured to be detachable from the gripping portion 31a of the operation unit 3.

The transmitting-receiving unit 51 transmits signals generated by the input unit 52 to the transmitting-receiving unit 26 via wireless communication. That is, the transmitting-receiving unit 26 receives the signals generated by the input unit 52 from the transmitting-receiving unit 51 via wireless communication. The operation controller 25 executes control in response to the signal received by the transmitting-receiving unit 26.

As shown in FIG. 6, the input unit 52 includes a travel input lever 52a, a direction input lever 52b, and a cutting blade input lever 52c. The travel input lever 52a is an operation means for increasing or decreasing the traveling speed of the main body 2. The travel input lever 52a is configured to control the traveling speed of the main body 2 via a drive switch (not shown). The direction input lever 52b is an operation means for controlling the traveling direction of the main body 2. Further, the cutting blade input lever 52c is an operation means for switching the rotation of the working unit 24 on and off.

### 2. Position of the center of gravity in the main body 2

This section describes the position of the center of gravity in the main body 2 according to one embodiment.

As shown in FIG. 11, the center of gravity of the main body 2 is located at position 2d when the battery 4 is mounted on the mounting portion 29. The attachment portion 28 is disposed so as to encompass position 2d in a plan view (hereinafter also simply referred to as "plan view") of either the main body 2 or the lower support plate 2c. That is, the attachment portion 28 is disposed at or in the vicinity of the center of gravity of the main body 2 in a plan view of the main body 2, with the battery 4 mounted on the mounting portion 29. In the present specification, the phrase "in the vicinity of the center of gravity" is defined as a region within a circle having a predetermined radius centered on the position of the center of gravity. The predetermined radius is preferably a value obtained by multiplying the diagonal length L of the main body 2 by a predetermined ratio. The predetermined ratio is, for example, 15%, preferably 7%, and more preferably 2%. Specifically, the predetermined ratio may be 2%, 3%, 4%, 5%, 6%, 7%, 8%, 9%, 10%, 11%, 12%, 13%, 14%, or 15%, and may be within a range between any two of these values. The attachment portion 28 may be disposed within the above-described circle without including position 2d. According to this aspect, the operation unit 3 for assisting the travel of the main body 2 can be connected (attached) at a position corresponding to the center of gravity of the main body 2, thereby improving the operability of the grass mower 11. Position 2d shown in FIG. 11 is located substantially at the center of the main body 2 in a plan view. However, the position is not limited thereto and may be offset in the front-rear, left-right, or diagonal direction, provided that it falls within the aforementioned range.

As shown in FIG. 11, the main body 2 has a substantially square shape in a plan view, and its center of gravity is preferably positioned substantially at the center thereof, such as at the intersection of the diagonals. That is, the main body 2 is preferably configured such that the center of gravity of the main body 2 is positioned at substantially the central portion of the main body 2 in a plan view of the main body 2 when the battery 4 is mounted to the mounting portion 29. In this case, the attachment portion 28 is disposed substantially at the center of the main body 2. According to this aspect, even during travel, particularly when traveling on a sloped surface, the operator can more easily operate the main body 2 via the operation unit 3 without increasing their burden. As a result, the traveling stability of the grass mower 11 can be improved.

As shown in FIG. 11, the travel motor 21 is disposed toward the rear side of the lower support plate 2c in the plan view. In addition, the first mounting portion 291 and the second mounting portion 292, which constitute the mounting portion 29, are offset toward the front side of the lower support plate 2c in a plan view. That is, the travel motor 21 is disposed offset toward one side in the front-rear direction, which is the traveling direction of the main body 2, and the mounting portion 29 is disposed offset toward the other side in the front-rear direction. According to this aspect, the weight balance of the grass mower 11 can be more optimally adjusted, and lifting of the vehicle body can be effectively prevented regardless of the traveling direction of the grass mower 11.

As shown in FIG. 11, the first mounting portion 291 and the second mounting portion 292 are disposed in the vicinity of the center in the left-right direction. According to this aspect, the weight balance of the grass mower 11 can be optimized. As a result, the grass mower 11 can travel with further improved stability. Because the batteries 4 are arranged in close proximity to each other, the opening/closing portion 2b can be compactly configured while still allowing easy removal and installation of the batteries 4.

### [Other Embodiments]

The working machine 1 according to one embodiment may also be implemented in the following configuration.

In the above-described one embodiment, the working machine 1 has been described using the grass mower 11 as an example; however, the present disclosure is not limited thereto. For example, the working machine 1 may be a collection machine (not shown), or a spreader (not shown). According to this aspect, a collection machine or a spreader with improved operability can be used to perform predetermined tasks in respective applications.

FIG. 13 is a top view showing the grass mower 11 with some components omitted for explaining an example arrangement of the mounting portion 29.

In the embodiment shown in FIG. 11, an example has been described in which the first mounting portion 291 and the second mounting portion 292 are disposed in proximity to the center in the left-right direction; however, the configuration is not limited to this. For example, as shown in FIG. 13, the first mounting portion 291 and the second mounting portion 292 may be disposed apart from each other in the left-right direction in a plan view of the main body 2. Such a configuration is particularly advantageous in cases where a large battery 4 is to be disposed, or where multiple batteries 4 of different sizes are to be accommodated.

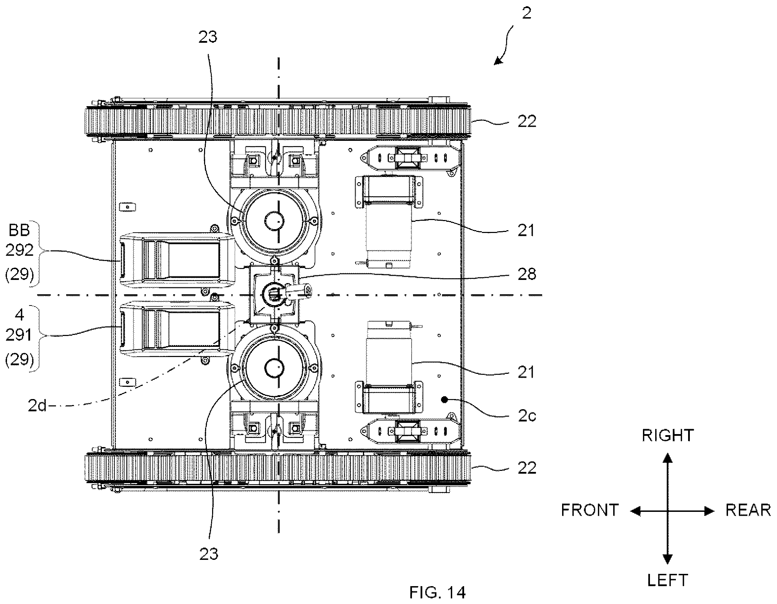

FIG. 14 is a top view showing the grass mower 11 with some components omitted for explaining an example in which a dummy battery BB is mounted.

In the embodiment shown in FIG. 11, an example is described in which two batteries 4 are mounted on the grass mower 11; however, the configuration is not limited thereto. For example, the dummy battery BB may be mounted on the mounting portion 29. Specifically, as shown in FIG. 14, the battery 4 may be mounted on the first mounting portion 291, while the dummy battery BB may be mounted on the second mounting portion 292. The dummy battery BB is designed to have a weight equivalent to that of the battery 4. In other words, the battery 4 may be configured to be mounted on either the first mounting portion 291 or the second mounting portion 292, and the dummy battery BB, having a weight equal to that of the battery 4, may be mounted on the other. According to this aspect, the center of gravity of the main body 2 can be adjusted to a predetermined location, regardless of the number of batteries 4 that are mounted.
As a result, the operability of the grass mower 11 can be maintained.

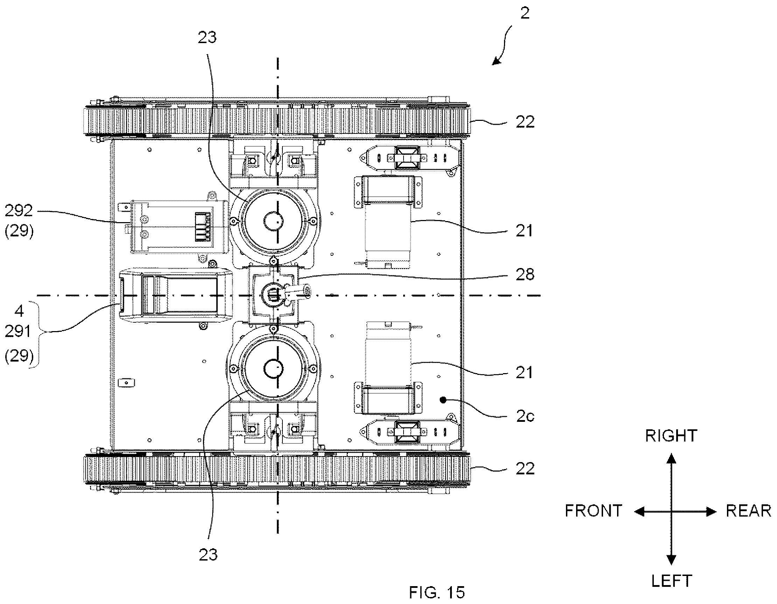

FIG. 15 is a top view showing the grass mower 11 with some components omitted for explaining an example in which the position of the mounting portion 29 is displaced.

In the embodiment shown in FIG. 11, an example is described in which the position of the mounting portion 29 is fixed; however, the configuration is not limited thereto. For example, the position of the mounting portion 29 may be configured to be displaceable depending on the number, shape, or weight of the batteries 4 mounted on the mounting portion 29. In other words, the main body 2 may be configured so that the position of the mounting portion 29 can be changed. Specifically, as shown in FIG. 15, when the battery 4 is mounted only on the first mounting portion 291, the mounting portion 29 may be displaced to the right. According to this aspect, the center of gravity of the main body 2 can be adjusted to a predetermined location, regardless of the number, shape, or weight of the batteries 4 mounted. As a result, the operability of the grass mower 11 can be maintained.

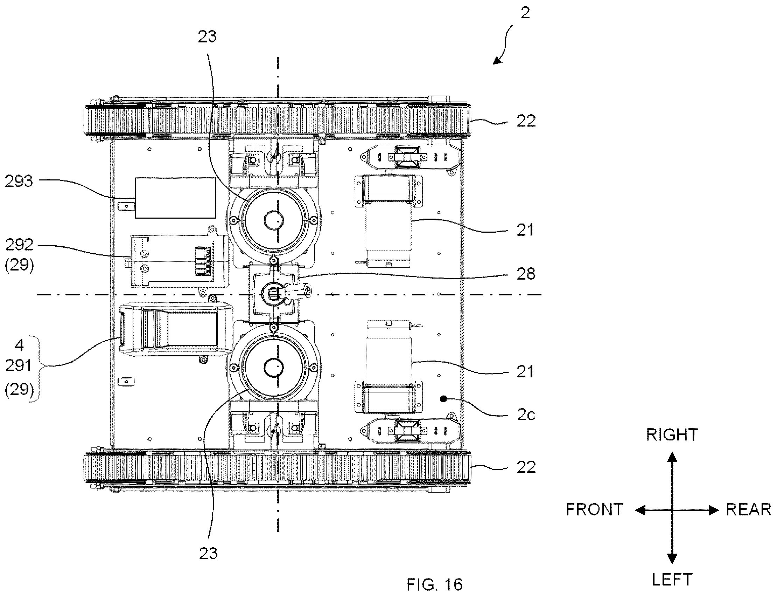

FIG. 16 is a top view showing the grass mower 11 with some components omitted for explaining an example of the weight mounting portion 293.

In the embodiment shown in FIG. 11, an example is described in which two batteries 4 are mounted on the grass mower 11; however, the configuration is not limited thereto. For example, a weight may be mounted on the main body 2 depending on the number, shape, or weight of the batteries 4 that are mounted. This weight is used to adjust the position of the center of gravity of the main body 2. That is, the main body 2 may include the weight mounting portion 293 for detachably mounting the weight to adjust the center of gravity. Specifically, as shown in FIG. 16, when the battery 4 is mounted only on the first mounting portion 291, the weight may be mounted on the weight mounting portion 293. According to this aspect, the center of gravity of the main body 2 can be adjusted to a predetermined location, regardless of the number, shape, weight, and the like of the batteries 4 that are mounted. As a result, the operability of the grass mower 11 can be maintained.

In the above embodiment, one example is described in which the operation unit 3 is the operation rod 31; however, the configuration is not limited thereto. For example, the operation unit 3 may be a cord connected to the attachment portion 28. In this case, the grass mower 11 may be operated using the remote control 5 removed from the gripping portion 31a of the operation unit 3. According to this aspect, the working range of the grass mower 11 can be easily changed.

Further, the working machine may also be implemented in the following configurations.
(1) A working machine, comprising: a main body including: a travel motor configured to generate rotational power for causing travel of the main body, a mounting portion configured to allow a battery for supplying electric power to the travel motor to be detachably mounted; and an attachment portion disposed inside a predetermined area formed in a plan view of the main body, wherein: the predetermined area is an area formed between a first straight line and a second straight line, the first straight line is a line that passes, in a left-right direction orthogonal to a front-rear direction, through a center position of the travel motor with respect to the front-rear direction that is a traveling direction of the main body; and the second straight line is a line that passes, in the left-right direction, through a center position of the mounting portion with respect to the front-rear direction; and an operation unit connected to the attachment portion and configured to be operable so as to assist the travel of the main body.
   According to this aspect, it is possible to improve the stability of the working machine during traveling and enable assistance by the operator during traveling.
(2) The working machine according to (1), wherein: the predetermined area has a predetermined width in each of a leftward direction and a rightward direction from a center line in the left-right direction; and each of the predetermined widths is less than or equal to 20% of a width of the main body in the left-right direction.
   According to this aspect, it is possible to improve the stability of the working machine during traveling and enable assistance by the operator during traveling.
(3). The working machine according to (1) or (2), wherein the attachment portion is, in a state where the battery is mounted on the mounting portion, disposed at a center of gravity of the main body in a plan view of the main body or at a vicinity thereof.
   According to this aspect, by enabling the operation unit for assisting traveling of the main body to be connected to a position corresponding to the center of gravity of the main body, operability of the working machine can be improved.
(4) The working machine according to any one of (1) to (3), wherein the main body is, in a state where the battery is mounted on the mounting portion, configured such that the center of gravity of the main body is positioned at substantially a central portion of the main body in a plan view of the main body.
   According to this aspect, even during travel, particularly when traveling on a sloped surface, the operator can more easily operate the main body using the operation unit without increasing their burden. As a result, the stability of the working machine during traveling can be improved.
(5) The working machine according to any one of (1) to (4), wherein: the travel motor is disposed offset toward one side in the front-rear direction; and the mounting portion is disposed offset toward another side in the front-rear direction.
   According to this aspect, the weight balance of the grass mower can be more optimally adjusted, and floating of the vehicle body can be suitably prevented regardless of the traveling direction of the grass mower.
(6) The working machine according to any one of (1) to (5), wherein the mounting portion includes a first mounting portion and a second mounting portion that are disposed apart from each other in the left-right direction in a plan view of the main body.
   According to this aspect, the configuration is particularly advantageous when a large battery is disposed or when batteries of different sizes are mountable.
(7) The working machine according to (6), wherein the first mounting portion and the second mounting portion are disposed close to a center in the left-right direction.
   According to this aspect, the weight balance of the working machine can be optimized. As a result, the working machine can travel more stably. In addition, because the batteries are disposed in the vicinity of each other, attaching and detaching multiple batteries can be easily performed.
(8) The working machine according to (6) or (7), wherein the working machine is configured such that the battery is mounted on one of the first mounting portion or the second mounting portion, and a dummy battery having a weight equal to that of the battery is mounted on another.
   According to this aspect, the center of gravity of the main body can be adjusted to a predetermined location regardless of the number of batteries mounted. As a result, the operability of the working machine can be maintained.
(9) The working machine according to any one of (1) to (8), wherein the main body is configured so that the position of the mounting portion can be changed.
   According to this aspect, the center of gravity of the main body can be adjusted to a predetermined location regardless of the number, shape, weight, and the like of the batteries mounted. As a result, the operability of the working machine can be maintained.
(10) The working machine according to any one of (1) to (9), wherein the main body further includes a weight mounting portion for detachably mounting a weight to adjust the center of gravity of the main body.
   According to this aspect, the center of gravity of the main body can be adjusted to a predetermined location, regardless of the number, shape, weight, and the like of the batteries to be mounted. As a result, the operability of the working machine can be maintained.
(11) The working machine according to any one of (1) to (10), wherein the operation unit is an operation rod.
   According to this aspect, the operator can directly operate the main body via the operation rod.
(12) The working machine according to any one of (1) to (11), wherein the working machine is a grass mower, a collection machine, or a spreader.

According to this aspect, predetermined operations can be performed using a grass mower, a collection machine, or a spreader. with improved operability.

The configuration is not limited thereto.

As described above, various embodiments of the present invention have been explained, but these are presented by way of example and are not intended to limit the scope of the invention. The novel embodiments can also be implemented in various other forms, and various omissions, replacements, and modifications can be made without departing from the gist of the invention. Such embodiments and their modifications are included in the scope and spirit of the invention and are also encompassed within the scope of the invention set forth in the claims and equivalents thereof.

## Claims

1. A working machine, comprising:
a main body including:
a travel motor configured to generate rotational power for causing travel of the main body,
a mounting portion configured to allow a battery for supplying electric power to the travel motor to be detachably mounted; and
an attachment portion disposed inside a predetermined area formed in a plan view of the main body, wherein:
the predetermined area is an area formed between a first straight line and a second straight line,
the first straight line is a line that passes, in a left-right direction orthogonal to a front-rear direction, through a center position of the travel motor with respect to the front-rear direction that is a traveling direction of the main body; and
the second straight line is a line that passes, in the left-right direction, through a center position of the mounting portion with respect to the front-rear direction; and
an operation unit connected to the attachment portion, the operation unit beingconfigured to be operable so as to assist the travel of the main body.

2. The working machine according to claim 1, wherein:
the predetermined area has a predetermined width in each of a leftward direction and a rightward direction from a center line in the left-right direction; and
each of the predetermined widths is less than or equal to 20% of a width of the main body in the left-right direction.

3. The working machine according to claim 1 or 2, wherein
the attachment portion is, in a state where the battery is mounted on the mounting portion, disposed at a center of gravity of the main body in a plan view of the main body or at a vicinity thereof.

4. The working machine according to any one of claims 1 to 3, wherein
the main body is, in a state where the battery is mounted on the mounting portion, configured such that the center of gravity of the main body is positioned at substantially a central portion of the main body in a plan view of the main body.

5. The working machine according to any one of claims 1 to 4, wherein:
the travel motor is disposed offset toward one side in the front-rear direction; and
the mounting portion is disposed offset toward another side in the front-rear direction.

6. The working machine according to any one of claims 1 to 5, wherein
the mounting portion includes a first mounting portion and a second mounting portion that are disposed apart from each other in the left-right direction in a plan view of the main body.

7. The working machine according to claim 6, wherein
the first mounting portion and the second mounting portion are disposed close to a center in the left-right direction.

8. The working machine according to claim 6 or 7, wherein
the working machine is configured such that the battery is mounted on one of the first mounting portion or the second mounting portion, and a dummy battery having a weight equal to that of the battery is mounted on another.

9. The working machine according to any one of claims 1 to 8, wherein
the main body is configured a position of the mounting portion.

10. The working machine according to any one of claims 1 to 9, wherein
the main body further includes a weight mounting portion for detachably mounting a weight to adjust the center of gravity of the main body.

11. The working machine according to any one of claims 1 to 10, wherein
the operation unit is an operation rod.

12. The working machine according to any one of claims 1 to 11, wherein
the working machine is a grass mower, a collection machine, or a spreader.
